# EUROPEAN PATENT SPECIFICATION

(11) **EP 4 281 254 B1**
(45) Date of publication and mention of the grant of the patent: **04.03.2026**
(21) Application number: 22742956.0
(22) Date of filing: 21.01.2022
(51) Int. Cl.: G03B 17/56, H04N 23/50, H04N 23/57, B25J 19/04, G03B 15/02, H04N 7/18, F16M 13/00

(54) **HANDHELD INSPECTION DEVICE**
HANDINSPEKTIONSVORRICHTUNG
DISPOSITIF D'INSPECTION PORTATIF

(30) Priority: 25.01.2021 SE 2150078
(43) Date of publication of application: 29.11.2023
(73) Proprietor: Bill Andersson Fordonslyftar AB, 663 40 Hammarö (SE)
(72) Inventor: ANDERSSON, Kennet, 652 20 KARLSTAD (SE); RYMAN, Johan, 663 40 HAMMARÖ (SE)
(74) Representative: Bjerkén Hynell KB
(86) International application number: PCT/SE2022/050067
(87) International publication number: WO 2022/159026

(56) References cited:
- CA-A1- 2 314 776
- CA-A1- 2 609 885
- CN-A- 107 222 691
- GB-A- 2 433 877
- US-A- 6 091 453
- US-A1- 2002 097 321
- US-A1- 2006 257 138
- US-A1- 2008 136 904
- US-A1- 2009 073 271
- US-A1- 2010 277 578
- US-B1- 6 847 394
- US-B1- 8 325 235

## Description

### TECHNICAL FIELD

The present invention relates to hand held inspection device for remote field of view, comprising an elongated shaft having a hand held end portion and a remote end portion, a camera, preferably a video camera, mounted at said remote end portion, said camera having a lens for admitting an image and having a field of view, a light source disposed adjacent said lens, a display operatively connected for receiving a signal from said video camera enabling displaying an image of objects in the field of view and a power source operatively connected for supplying electrical power to said camera and said display. This device is adapted to allow for inspection of obstructed or remote parts, e.g. of a machine, e.g. vehicle. It may also be used for other purposes, such as inspecting other types of remote spaces.

### TECHNICAL BACKGROUND

Workers who work with repair and inspection of vehicles and other machinery occasionally need to inspect inconveniently-located parts, or to watch a remote part while adjusting or watching another part.

Mechanics have addressed this problem in the past by using a "mechanic's mirror," which commonly is a telescoping metal rod with a handle at one end and a mirror mounted to the far end of the rod by pivots consisting of two separate ball joints joined by a link. The mirror is pivoted manually, then placed to allow the remote part to be viewed by reflecting it in the mirror. The mechanic's mirror has several disadvantages. For example, a mechanic's mirror requires a short, unobstructed viewing path from the remote part to the mirror, and from the mirror to the eye of the mechanic. Such a clear viewing path may not exist or may be difficult to find. If the part to be viewed is distant or small, the reflection in the mirror appears even more distant, making it difficult to see what is happening. For yet another example, if the part to be viewed is not already illuminated by the room light or sunlight, a separate light must be placed to illuminate it, which may be difficult.

From US20100277578, US 20090073271 and US 6847394 there are known solutions intended to solve the above disadvantages. There are disclosed basically similarly designed inspection devices, e.g. adapted for use in motor vehicle maintenance and repair, wherein a video camera is coupled by an elongated, flexible shaft to a self-contained, handheld power source. A source of illumination is mounted near the camera and directs light onto an object that is viewed. Input power to the camera and the illumination source are coupled through the flexible shaft, which is intended to maintain any desired flexed position. At the handheld power source or via connectors extending the power source a display screen is arranged so that the camera output signal may be observed.

From US 6091453, US 20060257138 and CA 2314776 there are known devices that provide a similar function as mentioned above, but instead of a flexible shaft using one or more adjustable pivots to facilitate change of camera direction.

Further, from US5065249 there is known a portable support boom for supporting both a video camera and a video monitor, including a foldable boom having the video camera fixed to a remote portion of the boom and the video monitor mounted to an accessible portion of the boom, intended to be held upright and directed by a cameraman in such a manner that the he may directly view images displayed by the monitor.

The above mentioned solutions have some disadvantages, which make them rather cumbersome and therefore there is a need for a more user friendly solution.

### SUMMARY OF THE INVENTION

Accordingly, one object of the present invention is to provide a remote viewing apparatus which is easy and reliable to use and handle, which is achieved by a device as defined in the appended claims.

Thanks to the invention there is provided a remote viewing apparatus which easily without strain thanks to the design, e.g. rigidity and ground support member, may be operated with one hand, so the other hand is free to perform an adjustment, hold an interfering part out of the way, work in the field of view observed through the apparatus, or the like. The invention is especially suited for inspection under a vehicle, or other machinery, e.g. for secure positioning of a lifting device onto intended lifting spots of the object to be lifted, which may eliminate hazardous situations when heavy objects are to be lifted. Thanks to providing a non-flexing rigid structure the direction of the camera is always reliably positioned in a user-friendly position, without any risk that the direction of the camera will be altered as is the case when using flexing shafts.

According to a preferred aspect of the invention there is provided a very compact camera device with light source and attachment arrangement that enables access for remote viewing of possibly narrow spaces. Still another preferred aspect of the invention is that there provided a light source, video camera, and video monitor using a single compact power supply, preferably (but not necessarily) a battery power supply.

According to another preferred aspect of the invention said elongated shaft (2) includes a tubular main body (20) including at least one first bend (25) or curved portion and that said remote end portion (4) is attached to a distal end of said main body (20), which provides the advantage that a cost efficient rigid structure may be achieved and with a design that enables good access to hidden areas, and wherein preferably said distal end includes a straight lined body portion (21) and that there is a first bend (25) between said straight lined body portion (21) forming said basic angle (δ), wherein preferably the pointed end of said first bend (25) is arranged with said ground support member (8).

According to another preferred aspect of the invention said remote end portion (4) includes a socket member (40) which encloses said camera (5), which provides the advantage that a cost efficient rigid fastening structure may be achieved and which also may provide protection for the camera, wherein preferably the front edge (42) of the socket member (40) extends at least in level with the front end (52) of the camera (5) and more preferred extends further in an axial direction than the front end (52) of the camera (5).

According to another preferred aspect of the invention said elongated shaft (2) includes a main body (20) comprising a plurality of bends (25, 26, 27), wherein said main body (20) includes at least said first bend (25) and also a second bend (26), which second bend (26) is located between said first bend (25) and said hand held end portion (3) presenting an angle (β) smaller than 180° and larger than 120°, which provides the advantage that a cost efficient rigid structure may be achieved and with a design that enables good access to hidden areas, wherein preferably said main body (20) includes a third bend (27) that points in an opposite direction compared to said first and second bends (25, 26) and which provides said hand held end portion (3) providing a hand grip (30) being positioned substantially horizontally in normal use of the inspection device (1), wherein the angle (γ) of the third bend (27) is between 100° and 140°.

According to another preferred aspect of the invention said camera (5) is substantially cylindrical in shape and that the diameter (D2) of the camera is within a range of 1,2-0,8 of the maximum cross-sectional measure (D1) of the main body (20), which provides the advantage that the design may enable good access to hidden areas.

According to another preferred aspect of the invention said ground support member (8) is in the form of a separate member, preferably an exchangeable wear part (80), which provides the advantage that an adapted ground support member may be provided possibly adapted to different needs, wherein preferably the main body (20) includes a positioning member (29) adapted to fit a corresponding fitting member of said exchangeable wear part (80), for safe and easy attachment and possible ease of exchange.

According to another preferred aspect of the invention said display (6) is connected with said camera (5) by means of a cable (7), wherein preferably said cable extends within a tubular portion of said elongated shaft (2), which provides the advantage that god protection of the cable is achieved and a possibility to use one and the same power source for the display and camera.

Other objects and features of the present invention are described in the remainder of this specification and in the claims. The present device has several advantages, e.g. a relatively inexpensive and versatile construction.

### BRIEF DESCRIPTION OF THE DRAWINGS

Fig. 1 is a side view of a preferred inspection device according to the invention.
Fig. 2 is a perspective view from a gripping side of the inspection device according to the invention, i.e. showing more of the handheld end of the device of Fig.1.
Fig. 3 is a perspective front view of the remote end of the inspection device, showing the camera.
Fig. 4 is a cross-sectional view of the remote end,
Fig.5 is a perspective view of the handheld end of the preferred embodiment of the inspection device,
Fig. 6 shows front and side views of a preferred display, and,
Fig. 7 schematically shows a modified of the invention.

### DETAILED DESCRIPTION OF THE FIGURES

The following detailed description of a preferred embodiment of the invention is meant to provide construction details and features which are presently regarded as being desirable, and to enable a person skilled in the art to practice and understand the invention and see the preferred modes of construction and operation. This detailed description is merely an illustration of the invention, and does not limit the full scope of any invention as defined in the claims following this specification.

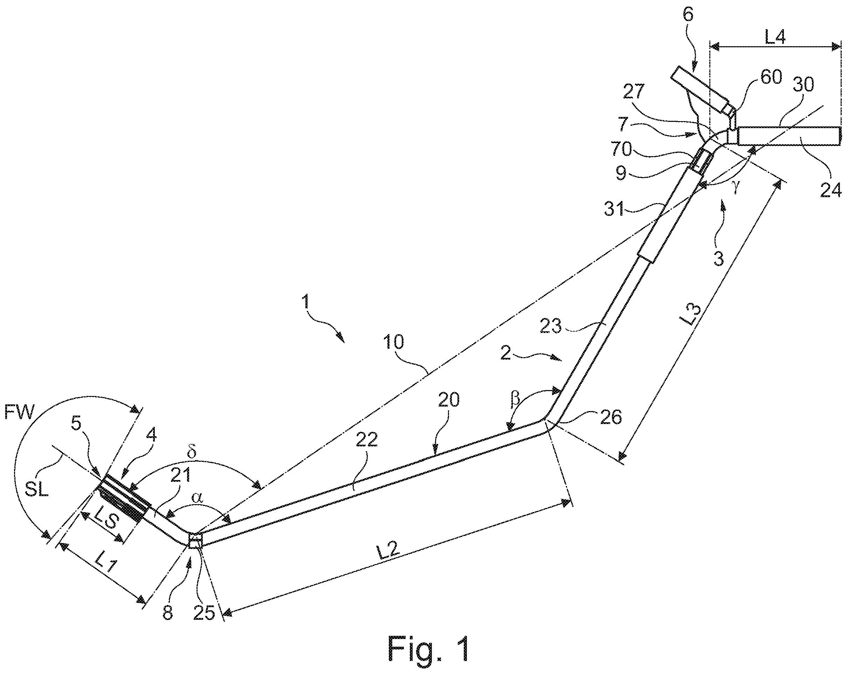

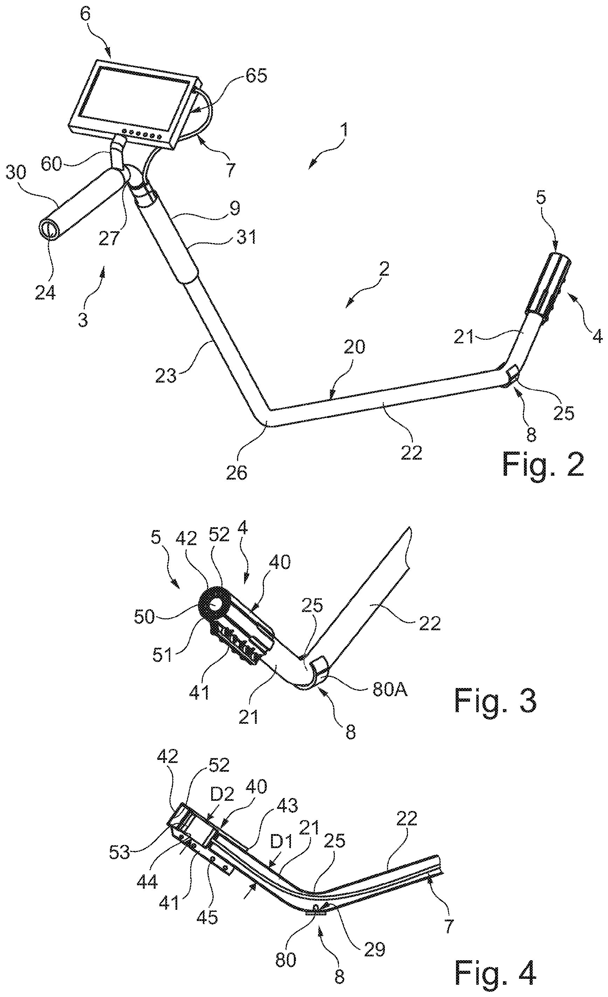

Referring first to Figs. 1 and 2, the present device for inspection of a remote or obstructed field of view is generally indicated as 1. The inspection device 1 includes an elongated shaft 2, a handheld end portion 3, a remote end portion 4 with a camera 5 (preferably video camera), and a display 6 and a ground support member 8. The image from the camera 5 is preferably transmitted via a cable 7 and displayed on the display 6. By providing the elongated shaft 2 in the form of a rigid structure (i.e. without flexing parts) and a ground support member 8 integrated with/attached to said rigid structure an easily maneuverable and handheld inspection device 1 is provided. The handheld end portion 3 and the remote end 4 (carrying the camera 5) either form integrated parts with the body of the elongated shaft 2 or are rigidly (preferably releasably) connected to the elongated shaft 2.

The shaft 2 can vary regarding length, weight and diameter. Preferably it is a lightweight design, prefably tubular, adapted to be held and operated by one hand. The video display is preferably sufficiently small (e.g. 100 - 200 mm wide and 80 - 150 mm high) to be easily supported by a support 60 mounted on the shaft 2. The total weight of the inspection device 1 shall preferably not exceed 3 kg and more preferred not exceed 2 kg. Preferably therefore the camera and the display shall have a low weight, preferably below 800 gram in total (more preferred not exceeding 600 gram), wherein more preferred the camera has a weight less than the display, preferably the camera weighing less than 300 grams and the display weighing less than 500 grams. Further, the camera 5 preferably has a Field of View FW that is larger than 90 degrees, preferably within the range of 120-179 degrees. Moreover, a high resolution is desired, preferably providing effective pixels above 800, more preferred over 1000.

The video display 6 is mounted by means of a support 60 within or near the space around the handheld end portion 3. By positioning the video display 6 at this position the video display 6 is located nearest to the user's eyes for viewing, and also moves the center of gravity of the inspection device 1 closest to the user's hands making use of the remote inspection device most comfortable. Preferably, the video display (which alternatively may also be a camera without video option) includes a battery that also may provide the camera 50 with power. The video display 6 is attached to the elongated shaft 2 by a swivel mount 60 A-C, providing an adjustable mounting. The swivel mount 60 A-C enables the user of the inspection device 1 to preferentially adjust the angle of the video display 6 relative to the elongated shaft 2 as desired by the user. In an alternate mode the display may be arranged by means of a floating swivel and the display arranged to maintain a horizontal position, e.g. by means of a built-in gyro device.

The elongated shaft is generally rigid, i.e. does not easily flex, and has a design that may assist in getting a good location of the camera in obstructed locations. This means that the elongated shaft 2 provides a rigid support for the remote end portion 4 and thanks to the rigidity easy positioning of the remote end portion 4, which adjacent its distal end 42 has the camera lens 50. In the exemplified shown embodiment, the shaft 2 has a main extension 10 of the upper part that presents an angle δ that is larger than 90° and smaller than 140° in relation to a line of extension SL of a substantially straight lined remote rigid end portion 4 with the camera 5, wherein preferably the centre sight line of the camera 5 is coaxial with said line of extension 21, which will provide a user friendly intuitive feel of aiming the camera for a desired spot/location. The main extension 10 is chosen as a line extending between the middle of an upper grip 30 and a point of transition (e.g. a V-shaped bend 25 or change from slightly curved to substantially straight lined SL), which transition position may correspond to a distance of about 100-300 mm from a remote end portion 42. Preferably, said point of transition is located at the start of a straight lined portion of the remote end of the inspection device, coaxial with a straight line SL that forms the central axis of the camera 50.

The length L1 of the remote end portion 4, e.g. including a part 21 of the main body 2, may be relatively short, preferably in the range of 100-300 mm. To enable access to narrow spaces the maximal cross-sectional width preferably is relatively small, i.e. smaller than 80 mm, and preferably substantially circular having a diameter D3 below 50 mm. The length **L1** of the (preferably straight) remote end portion 4 is less than 5 times the total length of the upper part along the line of extension 10.

According to the exemplary embodiment in Figs. 1, 2, 3 and 4 the lower straight end part extends from a first bend 25 that marks the crossing with the main extension line 10 of the upper part of the elongated shaft 2, wherein the main line 10 passes between the centre of the first bend 25 and the centre of the upper grip 30. The length of the line between the centre of the first bend 25 and the centre of the upper grip centre 30 is preferably within the range of 1500-2500 mm, more preferred 1700-2300 mm. Hence, the length of the main extension 10 of the upper part of the shaft 2 is at least five times longer than the length L1 of the lower straight end part. The main body 20 of the elongated shaft 2 is preferably in the form of a tube, preferably cylindrical and preferably made in aluminium.

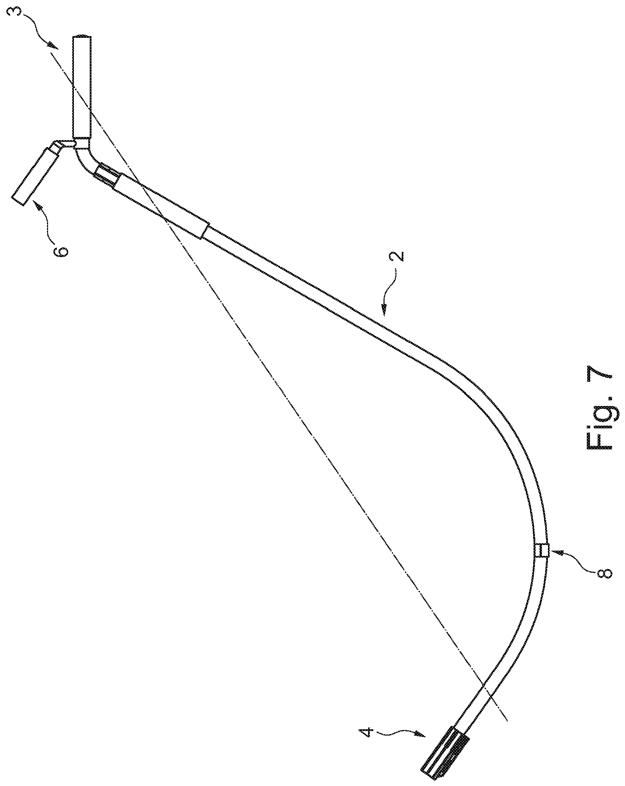

According to the preferred shown embodiment this tube 20 comprises at least one bend 25 (or alternatively a large radius curved portion, see Fig. 7) that will provide the camera 5 with its camera lens 50 in an appropriate direction for desired function. Preferably the main body 20 comprises a plurality of straight parts 21, 22, 23, 24 and a plurality of bends 25, 26, 27. There is preferably a second bend 26 at a position that is adjacent a mid-point of the extension of the upper part 10 of the elongated shaft, which will provide for a better ability to reach in under in narrow spaces, thanks to having an angle β at the second bend 26, that is within the range of 120-160°.

As a consequence, there is a remote part 21 of the main body 20 and a first bend 25 between that remote part 21 and second part 22 of the main body. The length L2 of the second part 22 is substantially longer than the first part 21. Preferably L2 is about two to four times longer than the length L1 of the first part 21. The second part 21 connects with its upper end to the second bend 26 where a third straight part 23 connects with the second bend 26 in an upward extension. The lengths of the second part 22 and the third part 23 are substantially the same, preferably L2 is about 0,9-1,1 of L3. Moreover, there is a third bend 27 at the upper end of the third part 23. The third bend 23 has it's pointed part pointing in an opposite direction of the main line of extension 10 compared to the first and the second bend 26, such that the upper grip 30 that is arranged onto the fourth straight part 24 of the main body 20 may extend substantially, horizontally when in use. Accordingly, the angle δ between the third part 23 and the fourth part 24 is in the range of 110°-140°, but in an opposite way compared to α and β. The fourth part is preferably covered with a grip friendly sleeve providing a comfortable grip 30.

The length L4 of the fourth part 24 is substantially smaller than the second and third parts 22, 23 and is preferably in the range of 150-400 mm, more preferred 200-300 mm, i.e. a length of the upper grip that perfectly may provide space for both hands of the user and normally merely gripped by one hand.

In Fig. 3 there is shown a front view of the remote end part of the elongated shaft 2. There is shown that the camera 5 is enclosed by a socket 40 which provides a protective cover for the camera 5 and also fixedly locates the camera along an axis SL that is coaxial with the axis of the first part 21 of the main body 20. The socket 40 is in the form of a relatively long cylinder that with its far end part 42 may totally enclose and thereby protect the camera 5 and that with its near end encloses and clamps onto the first body part 21 of the main body 20. The socket 40 is preferably made in one piece and includes one flange arrangement 41 which will arrange for appropriate clamping of the socket 40 around the first body part 21 and also clamping of the camera 50, e.g. by means of screw members 45 that may tighten the flange arrangement 41, as more clearly shown in Fig. 4. Further, Fig. 3 shows that there is a light source 51 arranged adjacent the camera lens 50, preferably in the form of a plurality of LED lamps encircling the lens 50. The length LS of the socket is preferably shorter than the total length of the remote end portion 4, prefarbly in the range of 50 - 150 mm.

Further, Fig. 4 shows that preferably the socket 40 is arranged with a circular ridge 44 that fits into a circular recess 53 of the camera 5, such that the camera 5 more securely may be fixated within the socket 40. Moreover, it is shown that the front edge 42 of the socket preferably extends a small distance (e.g. 1-5 mm, more preferred less than 3 mm) in front of the front end 52 of the camera 5, which will provide for a protective function of the camera 5 and still, thanks to the small protruding distance providing a possibly large field of view, preferably exceeding 120°, more preferred up to 160°. The socket 40 is preferably made in some kind of polymer or any other suitable material that is relatively resilient to enable contact with solid parts during inspection, without jeopardising the function of the inspection device, i.e. a material that may withstand being hit against hard objects without plastic deformation or cracking.

It may be seen that the diameter D1 of the first body part 21, which preferably is the same for all of the main body 20, substantially equals the diameter of the camera, which will provide for a compact arrangement that is a great advantage when performing inspections since it will enable access to also narrow spaces. The diameter of the tube 20 is preferably within the range of 20-30 mm. Preferably it is an aluminium tube having a wall thickness of between 1 and 3 mm. Accordingly the diameter D2 of the camera 5, that preferably has a rodlike, cylindrical shape, is also in the range of 20-30 mm, when preferably D1=0,8-1,2, D2 more preferred D1≤D2.

Further as can be seen the ground support member 8 may be in the form of an exchangeable wear part 80. In the figures it is exemplified by a polymeric clip 80 that may be safely positioned by means of having a hole 29 arranged at the pointed end of the first bend 25 which hole 29 will allow for safe securing at a desired position at the clip 80. Further, the clip 80 may preferably also have flexible enclosing arms 80A that further safeguards secure positioning of the ground support member 8.

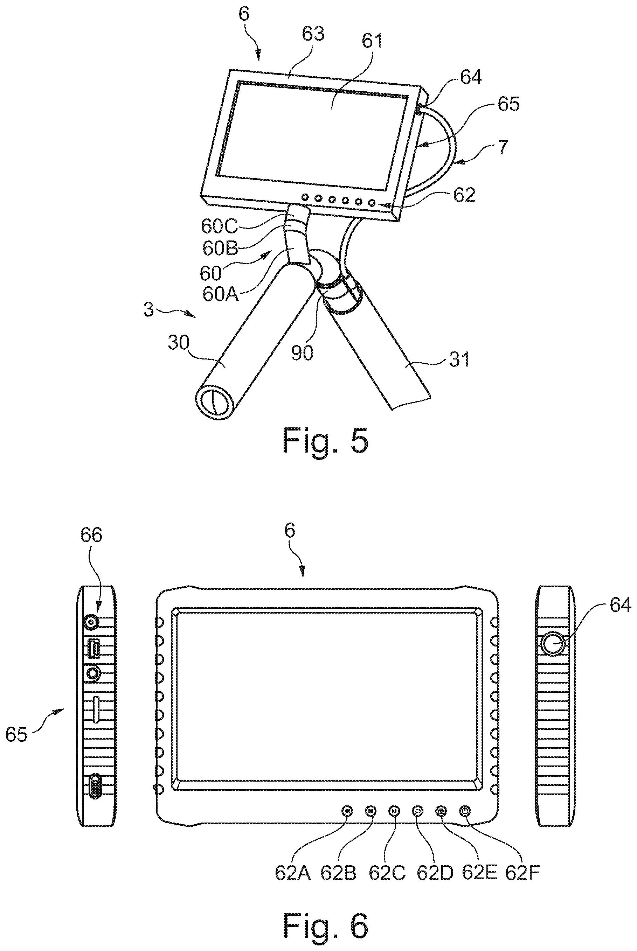

In Fig. 5 there is shown a more detailed view of the handheld end 3 of the inspection device 1 also more in detail disclosing the preferred embodiment of video display 6. It is shown that the video display 6 preferably is arranged with a framing 63 that may protect the display area 61 of the video display. Further, it is shown that in the preferred embodiment the power source is a battery that is positioned within the video display and that via a cable 7 may power both the camera 5 and the video display 6. The cable also may transfer signals between the camera 5 and the video display 6. Moreover it is shown that there are a plurality of function buttons 62 arranged at a lower portion of the video display in order to facilitate easy operation, e.g. with that hand that grips the upper grip member 30 using for example the thumb, and/or with the second hand.

Accordingly, either the left or the right hand may be used to push any of the function buttons to provide for desired viewing, etc. Furthermore Fig. 5 indicates that in an alternate mode the cable 7 may be arranged running alongside outside the main body 20, e.g. fixated by means of clips 90. An alternate for operation of the video display 6 is the use of wireless connection, e.g. Bluetooth which may be easily arranged for, but in the preferred mode there is use of a cable 7 which provide certain advantages, e.g. normally providing for higher reliability, and the ability to merely use one battery 65 to power both units 5, 6.

In Fig. 6 the video display is shown in different views, e.g. presenting a plug-in input 64 for the cable 7 and a side with plug-in options 66 that may connect the video display, e.g. using USB, with external units. There are also shown the possibility of arranging a plurality of easily accessed function buttons 62A-F.

The scope of protection of the invention is not limited to what has been described above but may be varied within the scope of the appended claims. For instance, it is evident for the skilled person that the ground support 8 may form an integrated part of the actual shaft, e.g. provided by a thicker metal tube which may provide appropriate wear resistance in itself. Further, it is evident that the ground support 8 may also be arranged onto a protruding part that protrudes from the main body 20, for example in the form of a V-shaped support member (not shown). Further, it is evident that a separate ground support member 80 may be provided in various forms, e.g. including a low friction wear part device, including some kind of roll/s. Furthermore it is evident that a remote end part may be provided as a separate longer unit 8 (e.g. thermo moulded) that may be attached to the main body at a distance in relation to the remote end portion 4, e.g. at a position substantially corresponding to the first bend 25 in the shown embodiment of the figures 1-4, and that in such an embodiment the ground support 8 will preferably be provided on said remote end part. Further, it is foreseen that there may be arranged one power source for the camera and another power source for the display 6, whereby it would also be possible to also use wireless communication between the camera 5 and the display 6.

## Claims

1. A hand held inspection device for remote field of view, comprising:
an elongated shaft (2) having a hand held end portion (3) and a remote end portion (4), a camera (5), preferably a video camera, mounted at said remote end portion (4), said camera (5) having a lens (50) for admitting an image and having a field of view (FW), a light source (51) disposed adjacent said lens (50), a display (6) operatively connected for receiving a signal from said video camera (5) enabling displaying an image of objects in the field of view (FW) and at least one power source (65) operatively connected for supplying electrical power to said camera (5) and said display (6),
wherein said shaft (2) provides a rigid structure including a general line of extension (10) of an upper main part, wherein said remote end portion (4) is rigidly connected to said shaft (2) and protrudes along a rigid straight line (SL) and is generally rod shaped, **characterized in that** said remote end portion (4) has a length (LS) between 50 mm to 300 mm and a maximal cross sectional measure not exceeding 80 mm, preferably not exceeding 60 mm, and **in that** said rigid straight line (SL) forms a basic angle (δ) with said general line of extension (10) that is between 95-125°, preferably 100-120°, and further **in that** said elongated shaft (2) is arranged with a ground support member (8).

2. Inspection device according to claim 1, **characterized in that** said elongated shaft (2) includes a tubular main body (20) including at least one first bend (25) or curved portion and that said remote end portion (4) is attached to a distal part (21) of said main body (20).

3. Inspection device according to claim 2, **characterized in that** said distal part (21) includes a straight lined body portion, wherein said first bend (25) between said straight lined body portion (21) said general line of extension (10) forming said basic angle (δ), wherein preferably the pointed end of said first bend (25) is arranged with said ground support member (8).

4. Inspection device according to any of claims 1-3, **characterized in that** said remote end portion (4) includes a socket member (40) which encloses said camera (5), wherein preferably the front edge (42) of the socket member (40) extends at least in level with the front end (52) of the camera (5) and more preferred extends further in an axial direction than the front end (52) of the camera (5).

5. Inspection device according to claim 4, **characterized in that** said socket member (40) includes a fastening device (41) which enables clamping of the camera (5) at a fixed position within the remote end portion (4), preferably providing a center line of said camera that is coaxial with said straight line (SL), wherein more preferred said socket member (40) includes a male/female device (43) adapted to fit with a corresponding male/female device (53) of the camera device (5).

6. Inspection device according to claim 2 and 4, **characterized in that** said socket member (40) also encloses a portion of said tube formed main body (20).

7. Inspection device according to claim 2, **characterized in that** said elongated shaft (2) includes a main body (20) comprising a plurality of bends (25, 26, 27), wherein said main body (20) includes at least said first bend (25) and also a second bend (26), which second bend (26) is located between said first bend (25) and said hand held end portion (3) presenting an angle (β) smaller than 180° and larger than 120°, preferably smaller than 160° and larger than 130°.

8. Inspection device according to claim 7, **characterized in that** said main body (20) includes a third bend (27) that points in an opposite direction compared to said first and second bends (25, 26) and which provides said hand held end portion (3) providing a hand grip (30) being positioned substantially horizontally in normal use of the inspection device (1), wherein the angle (γ) of the third bend (27) is between 100° and 140°, more preferred between 110° and 130°.

9. Inspection device according to claim 2, **characterized in that** said camera (5) is substantially cylindrical in shape and that the diameter (D2) of the camera is within a range of 1,2-0,8 of the maximum cross-sectional measure (D1) of the main body (20).

10. Inspection device according to any preceding claim, **characterized in that** said ground support member (8) is in the form of a separate member, preferably an exchangeable wear part (80), wherein preferably the main body (20) includes a positioning member (29) adapted to fit a corresponding fitting member of said exchangeable wear part (80).

11. Inspection device according to any preceding claim, **characterized in that** said display (6) is connected with said camera (5) by means of a cable (7), wherein preferably said cable extends within a tubular portion of said elongated shaft (2).

## Patentansprüche

1. Handgehaltene Inspektionsvorrichtung für ein entfernt befindliches Sichtfeld, umfassend: einen länglichen Schaft (2) mit einem handgehaltenen Endabschnitt (3) und einem entfernt befindlichen Endabschnitt (4), eine Kamera (5), vorzugsweise eine Videokamera, die an dem entfernt befindlichen Endabschnitt (4) montiert ist, wobei die Kamera (5) eine Linse (50) zum Aufnehmen eines Bildes und mit einem Sichtfeld (FW) aufweist, eine Lichtquelle (51), die benachbart zu der Linse (50) angeordnet ist, eine Anzeige (6), die funktional verbunden ist, um ein Signal von der Videokamera (5) zu empfangen, das das Anzeigen eines Bildes von Objekten in dem Sichtfeld (FW) ermöglicht, und mindestens eine Stromquelle (65), die funktional verbunden ist, um der Kamera (5) und der Anzeige (6) elektrischen Strom zuzuführen, wobei der Schaft (2) eine starre Struktur bereitstellt, die eine allgemeine Verlängerungslinie (10) eines oberen Hauptteils umfasst, wobei der entfernt befindliche Endabschnitt (4) starr mit dem Schaft (2) verbunden ist und entlang einer starren geraden Linie (SL) vorsteht und allgemein stabförmig ist, **dadurch gekennzeichnet, dass** der entfernt befindliche Endabschnitt (4) eine Länge (LS) zwischen 50 mm und 300 mm und ein maximales Querschnittsmaß von nicht mehr als 80 mm, vorzugsweise nicht mehr als 60 mm aufweist, und dass die starre gerade Linie (SL) einen Basiswinkel (δ) mit der allgemeinen Verlängerungslinie (10) bildet, der zwischen 95-125°, vorzugsweise 100-120° beträgt, und dass ferner der längliche Schaft (2) mit einem Bodenstützelement (8) angeordnet ist.

2. Inspektionsvorrichtung nach Anspruch 1, **dadurch gekennzeichnet, dass** der längliche Schaft (2) einen rohrförmigen Hauptkörper (20) umfasst, der mindestens eine erste Biegung (25) oder einen gekrümmten Abschnitt umfasst, und dass der entfernt befindliche Endabschnitt (4) an einem distalen Teil (21) des Hauptkörpers (20) befestigt ist.

3. Inspektionsvorrichtung nach Anspruch 2, **dadurch gekennzeichnet, dass** der distale Teil (21) einen geradlinigen Körperabschnitt umfasst, wobei die erste Biegung (25) zwischen dem geradlinigen Körperabschnitt (21) und der allgemeinen Verlängerungslinie (10) den Basiswinkel (δ) bildet, wobei vorzugsweise das spitze Ende der ersten Biegung (25) mit dem Bodenstützelement (8) angeordnet ist.

4. Inspektionsvorrichtung nach einem der Ansprüche 1-3, **dadurch gekennzeichnet, dass** der entfernt befindliche Endabschnitt (4) ein Sockelelement (40) umfasst, das die Kamera (5) umschließt, wobei sich vorzugsweise der Vorderrand (42) des Sockelelements (40) mindestens auf Höhe des vorderen Endes (52) der Kamera (5) erstreckt und sich bevorzugter weiter in einer axialen Richtung als das vordere Ende (52) der Kamera (5) erstreckt.

5. Inspektionsvorrichtung nach Anspruch 4, **dadurch gekennzeichnet, dass** das Sockelelement (40) eine Befestigungsvorrichtung (41) umfasst, die ein Klemmen der Kamera (5) an einer festen Position innerhalb des entfernt befindlichen Endabschnitts (4) ermöglicht, wobei vorzugsweise eine Mittellinie der Kamera bereitgestellt wird, die koaxial mit der geraden Linie (SL) ist, wobei bevorzugter das Sockelelement (40) eine Steck-/Buchsen-Vorrichtung (43) umfasst, die dazu ausgelegt ist, mit einer entsprechenden Steck-/Buchsen-Vorrichtung (53) der Kameravorrichtung (5) zusammenzupassen.

6. Inspektionsvorrichtung nach Anspruch 2 und 4, **dadurch gekennzeichnet, dass** das Sockelelement (40) auch einen Abschnitt des röhrenförmigen Hauptkörpers (20) umschließt.

7. Inspektionsvorrichtung nach Anspruch 2, **dadurch gekennzeichnet, dass** der längliche Schaft (2) einen Hauptkörper (20) aufweist, der eine Vielzahl von Biegungen (25, 26, 27) umfasst, wobei der Hauptkörper (20) mindestens die erste Biegung (25) und auch eine zweite Biegung (26) aufweist, wobei die zweite Biegung (26) zwischen der ersten Biegung (25) und dem handgehaltenen Endabschnitt (3) angeordnet ist und einen Winkel (β) aufweist, der kleiner als 180° und größer als 120°, vorzugsweise kleiner als 160° und größer als 130° ist.

8. Inspektionsvorrichtung nach Anspruch 7, **dadurch gekennzeichnet, dass** der Hauptkörper (20) eine dritte Biegung (27) umfasst, die im Vergleich zu der ersten und der zweiten Biegung (25, 26) in eine entgegengesetzte Richtung weist und die den handgehaltenen Endabschnitt (3) bereitstellt, der einen Handgriff (30) bereitstellt, der bei normaler Verwendung der Inspektionsvorrichtung (1) im Wesentlichen horizontal positioniert ist, wobei der Winkel (γ) der dritten Biegung (27) zwischen 100° und 140°, bevorzugter zwischen 110° und 130° liegt.

9. Inspektionsvorrichtung nach Anspruch 2, **dadurch gekennzeichnet, dass** die Kamera (5) eine im Wesentlichen zylindrische Form aufweist und dass der Durchmesser (D2) der Kamera innerhalb eines Bereichs von 1,2 - 0,8 des maximalen Querschnittsmaßes (D1) des Hauptkörpers (20) liegt.

10. Inspektionsvorrichtung nach einem der vorhergehenden Ansprüche, **dadurch gekennzeichnet, dass** das Bodenstützelement (8) die Form eines separaten Elements, vorzugsweise eines austauschbaren Verschleißteils (80), aufweist, wobei vorzugsweise der Hauptkörper (20) ein Positionierungselement (29) umfasst, das dazu ausgelegt ist, mit einem entsprechenden Passelement des austauschbaren Verschleißteils (80) zusammenzupassen.

11. Inspektionsvorrichtung nach einem der vorhergehenden Ansprüche, **dadurch gekennzeichnet, dass** die Anzeige (6) mittels eines Kabels (7) mit der Kamera (5) verbunden ist, wobei sich das Kabel vorzugsweise innerhalb eines rohrförmigen Abschnitts des länglichen Schafts (2) erstreckt.

## Revendications

1. Dispositif d'inspection tenu à la main pour un champ de vision à distance, comprenant :
un arbre allongé (2) ayant une partie d'extrémité tenue à la main (3) et une partie d'extrémité éloignée (4), une caméra (5), de préférence une caméra vidéo, montée au niveau de ladite partie d'extrémité éloignée (4), ladite caméra (5) ayant une lentille (50) pour admettre une image et ayant un champ de vision (FW), une source de lumière (51) disposée adjacente à ladite lentille (50), un affichage (6) connecté de manière opérationnelle pour recevoir un signal de ladite caméra vidéo (5) permettant d'afficher une image d'objets dans le champ de vision (FW) et au moins une source d'alimentation (65) connectée de manière opérationnelle pour fournir de l'énergie électrique à ladite caméra (5) et audit affichage (6), dans lequel ledit arbre (2) fournit une structure rigide comprenant une ligne d'extension générale (10) d'une partie principale supérieure, dans lequel ladite partie d'extrémité éloignée (4) est reliée rigidement audit arbre (2) et fait saillie le long d'une ligne droite rigide (SL) et est généralement en forme de tige, **caractérisée en ce que** ladite partie d'extrémité éloignée (4) a une longueur (LS) comprise entre 50 mm et 300 mm et une mesure de section transversale maximale ne dépassant pas 80 mm, ne dépassant pas de préférence 60 mm, et **en ce que** ladite ligne droite rigide (SL) forme un angle de base (5) avec ladite ligne d'extension générale (10) qui est compris entre 95 et 125°, de préférence de 100 à 120°, et en outre **en ce que** ledit arbre allongé (2) est agencé avec un élément de support au sol (8).

2. Dispositif d'inspection selon la revendication 1, **caractérisé en ce que** ledit arbre allongé (2) comprend un corps principal tubulaire (20) comprenant au moins une première courbure (25) ou partie incurvée et **en ce que** ladite partie d'extrémité éloignée (4) est fixée à une partie distale (21) dudit corps principal (20).

3. Dispositif d'inspection selon la revendication 2, **caractérisé en ce que** ladite partie distale comprend une partie de corps rectiligne, dans lequel ladite première courbure (25) entre ladite partie de corps rectiligne (21) et ladite ligne d'extension générale (10) formant ledit angle de base (5), dans lequel, de préférence, l'extrémité pointue de ladite première courbure (25) est agencée avec ledit élément de support au sol (8).

4. Dispositif d'inspection selon l'une quelconque des revendications 1 à 3, **caractérisé en ce que** ladite partie d'extrémité distante (4) comprend un élément de douille (40) qui entoure ladite caméra (5),
dans lequel de préférence le bord avant (42) de l'élément de douille (40) s'étend au moins au niveau de l'extrémité avant (52) de la caméra (5) et plus préférablement s'étend plus loin dans une direction axiale que l'extrémité avant (52) de la caméra (5).

5. Dispositif d'inspection selon la revendication 4, **caractérisé en ce que** ledit élément de douille (40) comprend un dispositif de fixation (41) qui permet le serrage de la caméra (5) à une position fixe à l'intérieur de la partie d'extrémité éloignée (4), fournissant de préférence une ligne centrale de ladite caméra qui est coaxiale avec ladite ligne droite (SL), dans lequel plus préférablement ledit élément de douille (40) comprend un dispositif mâle/femelle (43) adapté pour s'adapter à un dispositif mâle/femelle correspondant (53) du dispositif de caméra (5).

6. Dispositif d'inspection selon les revendications 2 et 4, **caractérisé en ce que** ledit élément formant douille (40) entoure également une partie dudit corps principal (20) formé par un tube.

7. Dispositif d'inspection selon la revendication 2, **caractérisé en ce que** ledit arbre allongé (2) comprend un corps principal (20) comprenant une pluralité de coudes (25, 26, 27), dans lequel ledit corps principal (20) comprend au moins ledit premier coude (25) et également un second coude (26), lequel second coude (26) est situé entre ledit premier coude (25) et ladite partie d'extrémité tenue à la main (3) présentant un angle (P) inférieur à 180° et supérieur à 120°, de préférence inférieur à 160° et supérieur à 130°.

8. Dispositif d'inspection selon la revendication 7, **caractérisé en ce que** ledit corps principal (20) comprend un troisième coude (27) qui pointe dans une direction opposée par rapport auxdits premier et deuxième coudes (25, 26) et qui fournit ladite partie d'extrémité tenue à la main (3) fournissant une poignée (30) positionnée sensiblement horizontalement en utilisation normale du dispositif d'inspection (1), dans lequel l'angle (y) du troisième coude (27) est compris entre 100° et 140°, de préférence entre 110° et 130°.

9. Dispositif d'inspection selon la revendication 2, **caractérisé en ce que** ladite caméra (5) est de forme sensiblement cylindrique et **en ce que** le diamètre (D2) de la caméra est dans une plage de 1,2 à 0,8 de la mesure de section transversale maximale (D1) du corps principal (20).

10. Dispositif d'inspection selon l'une quelconque des revendications précédentes, **caractérisé en ce que** ledit élément de support au sol (8) se présente sous la forme d'un élément séparé, de préférence une pièce d'usure interchangeable (80), dans lequel de préférence le corps principal (20) comprend un élément de positionnement (29) adapté pour s'adapter à un élément d'ajustement correspondant de ladite pièce d'usure interchangeable (80).

11. Dispositif d'inspection selon l'une quelconque des revendications précédentes, **caractérisé en ce que** ledit dispositif d'affichage (6) est relié à ladite caméra (5) au moyen d'un câble (7), ledit câble s'étendant de préférence à l'intérieur d'une partie tubulaire dudit arbre allongé (2).
